# EUROPEAN PATENT APPLICATION

(11) **EP 1 555 621 A1**
(43) Date of publication of application: **20.07.2005**
(21) Application number: 04030524.5
(22) Date of filing: 22.12.2004
(51) Int. Cl.: G06F 13/38, H04L 12/56, H04L 12/28

(54) **Device, communication system and method for data format conversion for wire/wireless local-area communication between wireless portable terminal and wire communication device**

(30) Priority: 17.01.2004 KR 2004003595
(71) Applicant: Samsung Electronics Co., Ltd., Suwon-si, Gyeonggi-do 442-742 (KR)
(72) Inventor: Park, Jae-Woo, Yeongtong-gu Suwon-si Gyeonggi-do (KR)
(74) Representative: Grünecker, Kinkeldey, Stockmair & Schwanhäusser Anwaltssozietät

(57) **Abstract**

A system wherein a mobile terminal can control the operation of an external communication device using wire/wireless local-area communication. The mobile terminal includes a local-area wireless communication module, and acts to perform the local-area wireless communication using the local-area wireless communication module. The communication device accesses an Internet communication network in response to an Internet access command input thereto to perform wire Internet communication. A wire/wireless data format conversion device is provided to perform the local-area wireless communication with the mobile terminal and wire communication with the communication device, and, in order to enable communication between the mobile terminal and the communication device, convert the format of received data into a format recognizable by a destination device, said destination device being one of the mobile terminal and communication device, and send the resulting data to the destination device over a corresponding transmission channel. The wire/wireless data format conversion device, upon receiving the Internet access command from the mobile terminal, converts the format of the received Internet access command into one recognizable by the communication device and sends the resulting Internet access command to the communication device and, upon receiving Internet access result information from the communication device, converts the format of the received result information into one recognizable by the mobile terminal and transmits the resulting result information to the mobile terminal.

## Description

The present invention relates to a mobile terminal, and more particularly to a system wherein a mobile terminal can control the operation of an external device using wire/wireless local-area communication, and a wire/wireless data format conversion device applied thereto. The present invention further relates to an Internet communication method, a method for controlling an operation of an external device using wire/wireless communication, and a method for converting wire/wireless data format.

In general, a mobile terminal refers to a wireless portable device that can provide a wireless communication service to a user while performing radio communication with a base transceiver station. Mobile terminals have become widespread and are now viewed as a necessity of life. The mobile terminal essentially includes a handset, data input/output unit, antenna unit, etc., in order to transmit and receive voice or image data signals to/from a counterpart.

Recently, a mobile terminal capable of performing local-area wireless communication is being introduced to the market. This mobile terminal communicates with an external communication device capable of performing the local-area wireless communication, within a desired distance using a local-area wireless communication module built therein. One method to perform the local-area wireless communication is IrDA (Infrared Data Association) communication.

IrDA is an industry-sponsored organization set up in 1993 to create international standards for hardware and software used in infrared communication links. In the IrDA communication, which is infrared communication, a focused ray of light in an infrared frequency spectrum measured in terahertz is modulated with information and transmitted from a transmitter to an external communication device within a relatively short distance. The infrared communication, such as the IrDA communication, is in theory the same technology as that used to control a television (TV) set with a remote controller.

The infrared communication, such as the IrDA communication, is playing an important role in wireless data communication owing to the popularization of notebook computers, personal digital assistants (PDAs), digital cameras, mobile terminals, pagers and so forth.

Examples of the infrared communication are sending document data to be printed from a notebook computer to a printer by infrared ray, exchanging business cards between handheld personal computers (PCs), coordinating schedules or telephone books between desktop and notebook computers, sending faxes from a notebook computer to a distant fax machine through a public telephone, and sending an image from a digital camera or mobile terminal to a computer by infrared ray.

This infrared communication involves infrared communication-supportable transceivers in both devices that communicate with each other.

In order for a mobile terminal to access a wireless Internet network, it is conventionally necessary for the mobile terminal to use a wireless local area network (LAN) or a wireless network provided by a mobile communication company.

Where the mobile terminal accesses the wireless Internet network in the above conventional manner, the following problems are caused.

Firstly, where the mobile terminal accesses the wireless Internet network using the wireless LAN, problems are encountered as follows. Mobile terminals recently introduced to the market tend to be miniaturized. For this reason, it is hard to mount a wireless LAN module to the mobile terminal. In addition, the wireless LAN module is expensive, resulting in an increase in the production costs of the mobile terminal.

During wireless communication of the mobile terminal, power must be supplied to the wireless LAN module, which leads to a large amount of current consumption and, in turn, a large amount of battery power consumption. Further, once being equipped with the wireless LAN module, the mobile terminal can communicate only in a specific area where an access point for the wireless LAN module is installed.

Secondly, where the mobile terminal accesses the wireless Internet network using the wireless network provided by the mobile communication company, problems are encountered as follows. The mobile terminal has to perform wireless Internet communication using the wireless network provided by the mobile communication company with an economic burden based on a high usage fee for wireless Internet access. Moreover, it is impossible for the mobile terminal to carry out transmission and reception of a telephone call during the Internet access. Furthermore, since the mobile terminal uses the wireless network for the wireless Internet access, there is a large amount of current consumption resulting from an electric field of the wireless network.

Therefore, the present invention has been made in view of the above problems.

It is the object of the present invention to provide a wire/wireless data format conversion device for supporting data transmission and reception of a mobile terminal such that the mobile terminal can transmit and receive data to/from a local-area communication device without using a fee-based communication network, and an Internet communication system using same.

This object is solved by the subject matter of the independent claims.

Preferred embodiments are defined in the dependent claims.

It is an aspect of the present invention to provide a wire/wireless data format conversion device for enabling a mobile terminal, capable of performing infrared communication, to access an external communication device, such as a computer, that can gain access to the Internet using a wire LAN cable, to use an Internet access service, and an Internet communication system using the same.

In accordance with an aspect of the present invention, the above can be accomplished by the provision of an Internet communication system comprising: a mobile terminal including a local-area wireless communication module, the mobile terminal performing local-area wireless communication using the local-area wireless communication module; a communication device for accessing an Internet communication network in response to an Internet access command input thereto to perform wire Internet communication; and a wire/wireless data format conversion device for performing the local-area wireless communication with the mobile terminal and wire communication with the communication device, and, in order to enable communication between the mobile terminal and the communication device, converting a format of received data into a format recognizable by a destination device, said destination device being one of the mobile terminal and the communication device, and sending the resulting data to the destination device one over a corresponding transmission channel.

The wire/wireless data format conversion device, upon receiving the Internet access command from the mobile terminal, converts a format of the received Internet access command into a format recognizable by the communication device and sends the resulting Internet access command to the communication device and, upon receiving Internet access result information from the communication device, converts a format of the received result information into a format recognizable by the mobile terminal and transmits the resulting result information to the mobile terminal.

In accordance with another aspect of the present invention, there is provided a system for controlling an operation of an external device using wire/ wireless communication, comprising: a mobile terminal including a local-area wireless communication module, the mobile terminal performing local-area wireless communication using the local-area wireless communication module; the external device including an interface for the wire communication, the external device performing an operation corresponding to an operation command input through the interface; and a wire/wireless data format conversion device for performing the local-area wireless communication with the mobile terminal and the wire communication with the external device, and, in order to enable communication between the mobile terminal and the external device, converting a format of received data into one recognizable by the destination device, and sending the resulting data to the destination device over a corresponding transmission channel.

The wire/wireless data format conversion device, upon receiving an operation command from the mobile terminal, converts a format of the received operation command into one recognizable by the external device and sends the resulting operation command to the external device and, upon receiving information regarding a result of an operation corresponding to the sent operation command from the external device, converts a format of the received result information a format one recognizable by the mobile terminal and transmits the resulting result information to the mobile terminal.

In accordance with yet another aspect of the present invention, there is provided a wire/wireless data format conversion device for data communication between a local-area wireless communication device capable of performing local-area wireless communication and a wire communication device capable of performing wire communication through a USB cable, comprising: an infrared transceiver for transmitting and receiving data to/from an infrared communication module of the wireless communication device; an infrared interface for providing an infrared communication interface for infrared communication through the infrared transceiver; an infrared signal converter for demodulating IrDA-format data received through the infrared interface into original data or converting original data into IrDA-format data; a USB signal converter for converting the demodulated data into USB-format data or demodulating USB-format data into original data; and a USB interface connected with the wire communication device via the USB cable for providing a USB communication interface with the wire communication device.

According to another aspect of the present invention, there is provided an Internet communication method, a method for controlling an operation of an external device using wire/wireless communication, and a method for converting wire/wireless data format.

The above features and other advantages of the present invention will be more clearly understood from the following detailed description taken in conjunction with the accompanying drawings, in which:
Fig. 1 is a block diagram of a wire/wireless data format conversion device according to a preferred embodiment of the present invention; and
Fig. 2 is a detailed block diagram of the wire/wireless data format conversion device in Fig. 1.

Now, preferred embodiments of the present invention will be described in detail with reference to the annexed drawings. In the following description made in conjunction with preferred embodiments of the present invention, a variety of specific elements such as constituent elements of various concrete circuits are shown. The description of such elements has been made only for a better understanding of the present invention. Those skilled in the art will appreciate that the present invention can be implemented without using the above-mentioned specific elements. In the following description of the present invention, a detailed description of known functions and configurations incorporated herein will be omitted when it may obscure the subject matter of the present invention.

In a feature of the present invention, a mobile terminal can access the Internet by controlling a computer, connected to the Internet, through the use of a wire/wireless data format conversion device capable of performing infrared communication, as a relay medium. Therefore, it is possible to curtail costs required for the Internet access and the construction of a wireless Internet network. Moreover, a mobile terminal can communicate with an external communication device using a wire/wireless data format conversion device with a wire communication/wireless communication relay function. Therefore, the mobile terminal can communicate with a local-area, external communication device. Furthermore, a wire/wireless data format conversion device can act as a relay between a communication device, such as a mobile terminal capable of performing infrared communications, and a home appliance, such as a computer capable of performing wire communications, to enable communication therebetween. Therefore, a local-area wireless communication device can control the operation of a wire communication device through the wire/wireless data format conversion device

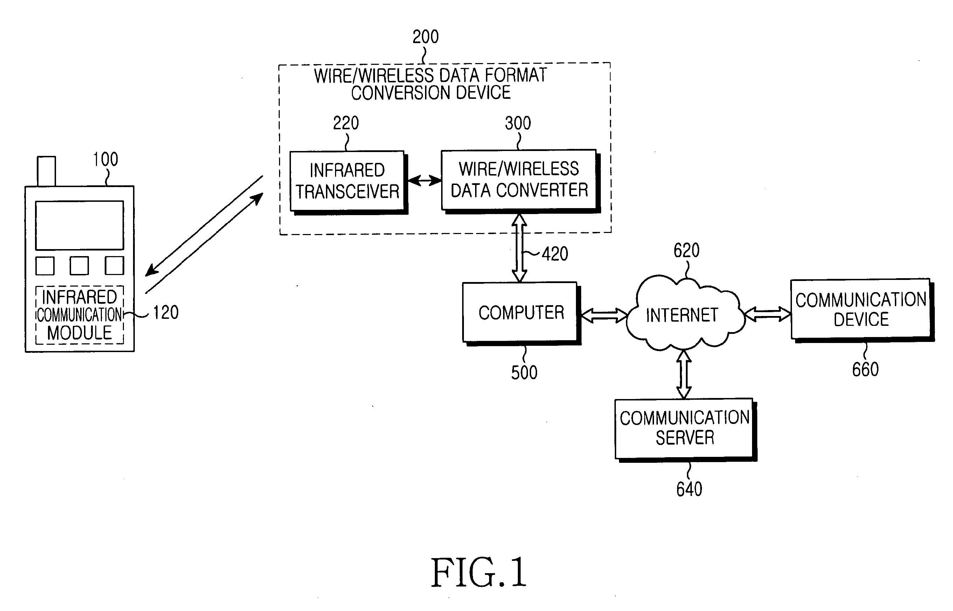

Fig. 1 is a block diagram of a wire/wireless data format conversion device for data communication between a mobile terminal and a communication device that performs Internet communication using a wire LAN, and an Internet communication system using the same, according to a preferred embodiment of the present invention.

In Fig. 1, the mobile terminal is denoted by the reference numeral 100 and the wire/wireless data format conversion device is denoted by the reference numeral 200. The mobile terminal 100 includes an infrared communication module 120, which is a local-area wireless communication module, and acts to perform local-area wireless communication with an external device using the infrared communication module 120. For the local-area wireless communication, the mobile terminal 100 performs infrared communication with the wire/wireless data format conversion device 200 using the infrared communication module 120.

A computer 500 is connected to Internet 620. The computer 500 acts to gain access to the Internet 620 in response to an Internet access command input thereto to perform wire-based Internet communications. The computer 500 performs operations corresponding to operation commands input from an external device connected via a universal serial bus (USB) cable, etc., as well as an input unit such as a keyboard or mouse. Once accessing the Internet 620, the computer 500 can communicate with a communication server 640 or destination communication device 660 over the wire-based communication network.

The wire/wireless data format conversion device 200 performs the infrared communication with the mobile terminal 100. It is also connected with the computer 500 via a USB cable 420 to communicate therewith by wire through a USB interface. In the present embodiment, the wire/wireless data format conversion device 200 functions to relay data between the mobile terminal 100 and the computer 500 to send the data to a destination device, i.e. the mobile terminal 100 or the computer 500, thereby enabling communication for data transfer between the mobile terminal 100 and the computer 500. At this time, upon receiving the data, the wire/wireless data format conversion device 200 converts the format of the received data into one recognizable by the destination device and sends the resulting data to the destination device over a corresponding transmission channel (an infrared communication channel or USB communication channel).

The wire/wireless data format conversion device 200, functioning as stated above, includes an infrared transceiver 220 and a wire/wireless data converter 300. The infrared transceiver 220 performs the infrared communication with the infrared communication module 120 in the mobile terminal 100 using IrDA communication. The wire/wireless data converter 300 converts the format of data, received from the mobile terminal 100 through the infrared communication, into a USB data format to send the received data to the computer 500 via the USB cable 420. The wire/wireless data converter 300 also converts the format of data, received from the computer 500 via the USB cable 420, into an IrDA data format to transmit the received data by an infrared signals.

The Internet access in the Internet communication system with the above-described configuration is made in the following manner.

If the internet access command is input to the mobile terminal 100, the infrared communication module 120 in the mobile terminal 100 converts the format of the input command into the IrDA data format and transmits the resulting command to the wire/wireless data format conversion device 200 by an infrared signal. In the wire/wireless data format conversion device 200, the infrared transceiver 220 receives the Internet access command transmitted from the mobile terminal 100 and transfers it to the wire/wireless data converter 300. The wire/wireless data converter 300 converts the Internet access command transferred from the infrared transceiver 220 from the IrDA data format into the USB data format and sends the resulting command to the computer 500 via the USB cable 420.

The computer 500 recognizes the Internet access command of the USB data format received via the USB cable 420 and, in response thereto, accesses the internet 620. If the computer 500 accesses the Internet 620, it then receives a Web page over the Internet 620 and sends the received Web page to the wire/wireless data format conversion device 200 in the USB data format. In the wire/wireless data format conversion device 200, the wire/wireless data converter 300 converts the Web page from the computer 500 from the USB data format into the IrDA data format and transmits the resulting Web page to the mobile terminal 100 by an infrared signal through the infrared transceiver 220.

The infrared communication module 120 of the mobile terminal 100 receives the Web page transmitted from the wire/wireless data format conversion device 200 and converts it from the IrDA data format into a data format recognizable by the mobile terminal 100. The mobile terminal 100 displays the Web page format-converted by the infrared communication module 120 on its screen. At this time, if a command to select a linked menu in the displayed Web page or download data linked to a desired menu therein is input to the mobile terminal 100, the infrared communication module 120 in the mobile terminal 100 converts the format of the input command into the IrDA data format and transmits the resulting command to the wire/wireless data format conversion device 200.

In the wire/wireless data format conversion device 200, the infrared transceiver 220 receives the command of the IrDA data format from the mobile terminal 100, and the wire/wireless data converter 300 converts the command received by the infrared transceiver 220 from the IrDA data format into the USB data format and sends the resulting command to the computer 500.

The computer 500 recognizes the command of the USB data format sent from the wire/wireless data format conversion device 200 and performs an operation corresponding thereto. For example, if the recognized command is a command to select a linked menu, the computer 500 requests and receives a Web page linked to the selected menu from an associated server over the Internet 620. The computer 500 then converts the format of the received Web page into the USB data format and sends the resulting Web page to the wire/wireless data format conversion device 200. The wire/wireless data format conversion device 200 receives the Web page of the USB data format from the computer 500, converts it from the USB data format into the IrDA data format and transmits the resulting Web page to the mobile terminal 100 by an infrared signal. As a result, the mobile terminal 100 displays the Web page linked to the selected menu on the screen.

On the other hand, if the recognized command is a command to download data linked to a desired menu, the computer 500 requests and receives the linked data over the internet 620. The computer 500 then converts the format of the received data into the USB data format and sends the resulting data to the wire/wireless data format conversion device 200.

The wire/wireless data format conversion device 200 receives the data of the USB data format from the computer 500, converts it from the USB data format into the IrDA data format and transmits the resulting data to the mobile terminal 100 by an infrared signal.

The infrared communication module 120 of the mobile terminal 100 receives the data transmitted by infrared ray and converts the format of the received data into a data format recognizable by the mobile terminal 100. As a result, the mobile terminal 100 can display the received data on the screen or store it in a memory.

Therefore, the mobile terminal 100 can control the Internet access through the use of the computer 500, connected to the Internet 620, by taking the wire/wireless data format conversion device 200 capable of performing the infrared communication, as a relay medium, thereby making it possible to curtail costs required for Internet access and the construction of a wireless Internet network.

Moreover, the mobile terminal 100 can communicate with an external communication device using the wire/wireless data format conversion device 200 with the wire communication/wireless communication relay function. Thus, the mobile terminal 100 can communicate with a local-area, external communication device.

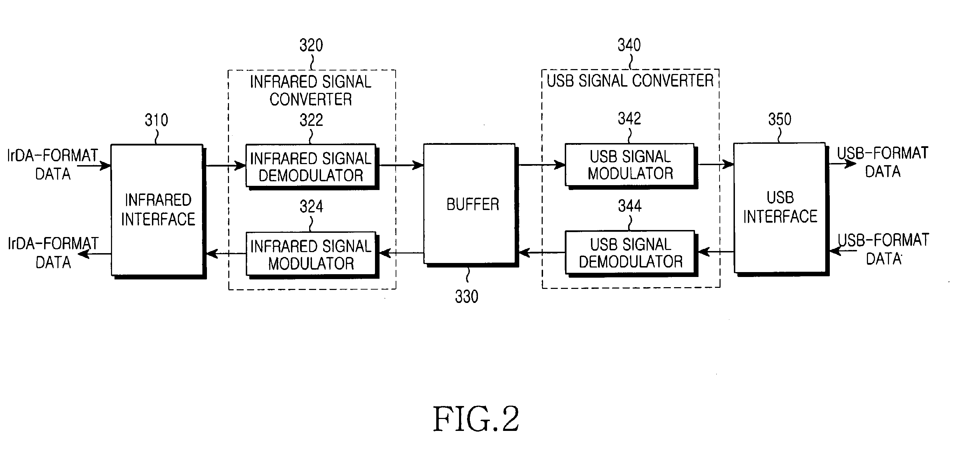

Fig. 2 is a detailed block diagram of the wire/wireless data format conversion device 200 in Fig. 1.

An infrared interface 310 is adapted to perform the infrared communication with the infrared communication module 120 provided in the mobile terminal 100 using the IrDA communication. As a result, the infrared interface 310 receives IrDA-format data transmitted by an infrared signal from the mobile terminal 100 or transmits IrDA-format data to the mobile terminal 100 by an infrared signal.

An infrared signal converter 320 is adapted to convert IrDA-format data into the original data or vice versa. To this end, the infrared signal converter 320 includes an infrared signal demodulator 322 and an infrared signal modulator 324. The infrared signal demodulator 322 demodulates IrDA-format data into the original data and outputs the demodulated data to USB signal modulator 342 through buffer 330.

The infrared signal modulator 324 inputs data from a USB signal demodulator 344 through the buffer 330 and converts the input data into IrDA-format data. The infrared signal modulator 324 then transmits the converted IrDA-format data to the mobile terminal 100 through the infrared interface 310.

The USB signal converter 340 is adapted to convert the demodulated data from the infrared signal demodulator 322 into USB-format data or demodulate USB-format data into the original data. To this end, the USB signal converter 340 includes the USB signal modulator 342 and the USB signal demodulator 344. The USB signal modulator 342 inputs the demodulated data from the infrared signal demodulator 322 through the buffer 330. At this time, the USB signal modulator 342 converts the read, demodulated data into USB-format data. The USB signal modulator 342 then sends the converted USB-format data to the computer 500 via a USB interface 350 and the USB cable 420.

The USB signal demodulator 344 demodulates USB-format data, sent from the computer 500 via the USB cable 420 and USB interface 350, into the original data. The USB signal demodulator 344 then outputs the demodulated data to the infrared signal modulator 324 through the buffer 330.

Therefore, the wire/wireless data format conversion device 200 can act as a relay between a communication device, such as a mobile terminal capable of performing the infrared communication, and a home appliance, such as a computer capable of performing the wire communication, to enable communication therebetween, thereby making it possible for a local-area wireless communication device to control the operation of a wire communication device through the wire/wireless data format conversion device 200.

As apparent from the above description, according to the present invention, a mobile terminal can access the Internet by controlling a computer, connected to the Internet at all times, through the use of a wire/wireless data format conversion device capable of performing infrared communication, as a relay medium. Therefore, it is possible to curtail costs required for the Internet access and the construction of a wireless Internet network.

Moreover, a mobile terminal can communicate with an external communication device using a wire/wireless data format conversion device with a wire communication/wireless communication relay function. Therefore, the mobile terminal can communicate with a local-area, external communication device. A local-area wireless communication device can control the operation of a wire communication device through the wire/wireless data format conversion device.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. An Internet communication system, comprising:
a mobile terminal including a local-area wireless communication module, said mobile terminal performing local-area wireless communication using said local-area wireless communication module;
a communication device for accessing an Internet communication network in response to an Internet access command input thereto to perform wire Internet communication; and
a wire/wireless data format conversion device for performing the local-area wireless communication with said mobile terminal and wire communication with said communication device, and, in order to enable communication between said mobile terminal and said communication device, converting a format of received data into a format recognizable by a destination device, said destination device being one of said mobile terminal and communication device, and sending the resulting data to the destination device over a corresponding transmission channel;
whereby said wire/wireless data format conversion device, upon receiving said Internet access command from said mobile terminal, converts a format of the received Internet access command into a format recognizable by said communication device and sends the resulting Internet access command to said communication device and, upon receiving Internet access result information from said communication device, converts a format of the received result information into a format recognizable by said mobile terminal, and transmits the resulting result information to said mobile terminal.

2. The Internet communication system as set forth in claim 1, wherein said local-area wireless communication module is an infrared communication module, said mobile terminal performing infrared communication with said wire/wireless data format conversion device using said infrared communication module.

3. The Internet communication system as set forth in claim 2, wherein said wire/wireless data format conversion device is adapted to perform the wire communication with said communication device using a USB cable.

4. The Internet communication system as set forth in claim 3, wherein the wire/wireless data format conversion device further comprises:
an infrared transceiver for transmitting and receiving data to/from said infrared communication module of said mobile terminal by an infrared signal; and
a wire/wireless data converter for converting Infrared Data Association-format data transmitted from said mobile terminal into USB-format data for the wire communication using said USB cable, sending the converted USB-format data to said communication device, converting USB-format data sent from said communication device into Infrared Data Association-format data for the infrared communication with said mobile terminal, and transmitting the converted Infrared Data Association-format data to said mobile terminal through said infrared transceiver.

5. The Internet communication system as set forth in claim 4, wherein the wire/wireless data converter further comprises:
an infrared interface for providing an infrared communication interface for the infrared communication through said infrared transceiver;
an infrared signal converter for demodulating Infrared Data Association-format data received through said infrared interface into original data or converting original data into Infrared Data Association-format data;
a USB signal converter for converting the demodulated data into USB-format data or demodulating USB-format data into original data; and
a USB interface connected with said communication device via said USB cable for providing a USB communication interface with said communication device.

6. The Internet communication system as set forth in claim 5, wherein the infrared signal converter further comprises:
an infrared signal demodulator for demodulating said Infrared Data Association-format data received through said infrared interface into original data and sending the demodulated data to said USB signal converter; and
an infrared signal modulator for converting said data demodulated by said USB signal converter into Infrared Data Association-format data and sending the converted Infrared Data Association-format data to said infrared interface.

7. The Internet communication system as set forth in claim 6, wherein the USB signal converter further comprises:
a USB signal modulator for converting said data demodulated by said infrared signal demodulator into USB-format data and sending the converted USB-format data to said communication device through said USB interface; and
a USB signal demodulator for demodulating USB-format data, sent from said communication device through said USB interface, into original data and sending the demodulated data to said infrared signal modulator.

8. A system for controlling an operation of an external device using wire/ wireless communication, comprising:
a mobile terminal including a local-area wireless communication module, said mobile terminal performing local-area wireless communication using said local-area wireless communication module;
an interface for the wire communication included in said external device, said external device performing an operation corresponding to an operation command input through said interface; and
a wire/wireless data format conversion device for performing the local-area wireless communication with said mobile terminal and the wire communication with said external device, and, in order to enable communication between said mobile terminal and said external device, converting a format of received data into a format recognizable by a destination device, said destination device being one of said mobile terminal and external device, and sending the resulting data to the destination device over a corresponding transmission channel;
whereby said wire/wireless data format conversion device, upon receiving an operation command from said mobile terminal, converts a format of the received operation command into a format recognizable by said external device, and sends the resulting operation command to said external device, and upon receiving information regarding a result of an operation corresponding to the sent operation command from said external device, converts a format of the received result information into a format recognizable by said mobile terminal, and transmits the resulting result information to said mobile terminal.

9. A wire/wireless data format conversion device for data communication between a local-area wireless communication device capable of performing local-area wireless communication and a wire communication device capable of performing wire communication through a USB cable, comprising:
an infrared transceiver for transmitting data to and receiving data from an infrared communication module of said wireless communication device by an infrared signal;
an infrared interface for providing an infrared communication interface for infrared communication through said infrared transceiver;
an infrared signal converter for demodulating Infrared Data Association-format data received through said infrared interface into original data and converting original data into Infrared Data Association-format data;
a USB signal converter for converting the demodulated data into USB-format data and demodulating USB-format data into original data; and
a USB interface connected with said wire communication device via said USB cable for providing a USB communication interface with said wire communication device.

10. An Internet communication method in an Internet communication system having a mobile terminal including a local area wireless communication module, said mobile terminal performing local-area wireless communication using said local-area wireless communication module, wherein said method comprises:
accessing by a communication device an Internet communication network in response to an Internet access command input thereto to perform wire Internet communication; and
performing by a wire/wireless data format conversion device the local-area wireless communication with said mobile terminal and wire communication with said communication device, and converting a format of received data into a format recognizable by a destination device for enabling communication between said mobile terminal and said communication device, wherein said destination device is one of said mobile terminal and communication device; and
sending the resulting data to the destination device over a corresponding transmission channel;
whereby upon receiving said Internet access command from said mobile terminal, converting by said wire/wireless data format conversion device a format of the received Internet access command into a format recognizable by said communication device and sending by said wire/wireless data format conversion device the resulting Internet access command to said communication device, and, upon receiving Internet access result information from said communication device, converting by said wire/wireless data format conversion device a format of the received result information into a format recognizable by said mobile terminal, and transmitting by said wire/wireless data format conversion device the resulting result information to said mobile terminal.

11. The Internet communication method as set forth in claim 10 being operated in the Internet communication system according to one of claims 1 to 9.

12. A method for controlling an operation of an external device using wire/wireless communication in a system having a mobile terminal including a local-area wireless communication module, an interface for the wire communication included in said external device, and wire/wireless data format conversion device, wherein the method comprises:
performing by said mobile terminal local-area wireless communication using said local-area wireless communication module;
performing by said external device an operation corresponding to an operation command input through said interface; and
performing by said wire/wireless data format conversion device the local-area wireless communication with said mobile terminal and the wire communication with said external device; and, for enabling communication between said mobile terminal and said external device, converting by said wire/wireless data format conversion device a formal of received data into a format recognizable by a destination device being one of said mobile terminal and external device, and sending by said wire/wireless data format conversion device the resulting data to the destination device over a corresponding transmission channel;
whereby upon receiving an operation command from said mobile terminal, converting by said wire/wireless data format conversion device, a format of the received operation command into a format recognizable by said external device, and sending by said wire/wireless data format conversion device the resulting operation command to said external device, and upon receiving information regarding a result of an operation corresponding to the sent operation command from said external device, converting by said wire/wireless data format conversion device a format of the received result information into a format recognizable by said mobile terminal, and transmitting by said wire/wireless data format conversion device the resulting result information to said mobile terminal.

13. A method of converting wire/wireless data format for data communication between a local area wireless communication device capable of performing wireless communication and a wire communication device capable of performing communication through a USB cable, wherein said method comprises:
transmitting and receiving by an infrared transceiver data from an infrared communication module of said wireless communication device by an infrared signal;
providing by an infrared interface an infrared communication interface for infrared communication through said infrared transceiver;
demodulating by an infrared signal converter Infrared Data Association-format data received through said infrared interface into original data and converting by said infrared signal converter original data into Infrared Data Association-format data;
converting by a USB signal converter the demodulated data into USB-format data and demodulating by said USB signal converter USB-format data into original data; and
connecting a USB interface with said wire communication device via said USB cable for providing a USB communication interface with said wire communication device.
